# EUROPEAN PATENT SPECIFICATION

(11) **EP 0 967 881 B1**
(45) Date of publication and mention of the grant of the patent: **17.09.2003**
(21) Application number: 98910660.4
(22) Date of filing: 13.02.1998
(51) Int. Cl.: A21D 13/00, A21D 15/00, A21D 8/06

(54) **WAFER PRODUCT**
WAFFELPRODUKT
PRODUIT FORMANT GAUFRETTE

(30) Priority: 27.02.1997 EP 97200556
(43) Date of publication of application: 05.01.2000
(73) Proprietor: UNILEVER PLC, London EC4P 4BQ (GB); UNILEVER N.V., 3013 AL Rotterdam (NL)
(72) Inventor: REEVES, Joanna Catherine, F-52100 Saint Dizier (FR); TRICARICO, Vito Antonio, Jr., Localita' Pascarola, 80023 Caivano (IT)
(74) Representative: Hugot, Alain
(86) International application number: EP9800820
(87) International publication number: WO98037767

(56) References cited:
- EP-A- 0 107 289
- DE-A- 4 239 143
- US-A- 3 696 734
- US-A- 5 131 320

## Description

### Technical Field of the Invention

The invention relates to a circular wafer product and a process for its manufacture.

### Background to the Invention

Circular wafer products are well known in the art. However to date in order to achieve the required circular shape the wafer batter is introduced into a hot mould. Such use of a mould results in a crude, soggy wafer because the mould provides no outlet for the moisture during cooking.

Wafer products manufactured by the introduction of a wafer batter between heated flat plates are crisp, but because of preferential flow of the batter, it has not been possible to date to provide an approximately circular product.

The present invention therefore addresses the problem of how to provide an approximately circular wafer which also has the desired crispness.

Surprisingly this problem can be solved if a specific pattern is formed by ridges on both sides of the wafer.

### Description of the Invention

Accordingly the invention provides a crisp, approximately circular wafer product whereby the two surfaces of the wafer each have a pattern formed by ridges, the first surface having a pattern comprising at least two grid patterns superimposed on each other, one grid being at an angle of approximately 45° to the other, the second surface having a single grid pattern, the pattern being at 45° to the lower grid on the first surface.

Preferably each grid is formed by a pattern of squares.

The upper surface has preferably two superimposed grid patterns, the first (upper) grid being at a 45° orientation to the second (lower) grid.

Preferably the squares forming the pattern of the first grid on the first surface are larger compared to the squares forming the second grid of the first surface.

Preferably the squares forming the grid pattern on the second surface are smaller compared with the squares forming first grid pattern on the first surface. Most preferably the squares forming the grid pattern on the second surface are smaller compared with the squares forming either of the two superimposed grid patterns on the first surface.

The grid of the second surface preferably has the same orientation as the first grid of the first surface.

The wafers of the invention will generally be used as a component in a food product. Typically the wafer will be shaped and then filled with a food component, for example ice cream. Suggested products which may be produced are filled cones and Taco products.

Preferably when a filled product is prepared, the first surface of the wafer will form the outer surface of the filled product and the second surface will form the inner surface of the filled product.

The wafers are prepared by placing a wafer batter formulation between two heated plates having the required pattern engraved on the plates. The plates will typically be at a temperature of from 185 to 215°C.

Preferably the wafer is oiled whist still hot (for example at a temperature of greater than or equal to 100°C).

If a shaped rather than a flat wafer is required, the wafer may either be formed into the required shape whilst still hot, or alternatively the wafer can be re-heated in order to be shaped. The re-heating can be by any suitable means, however the preferred means of re-heating is by infra-red radiation.

For preparation of the wafer product of the invention a wide number of wafer formulations can be used. It is believed to be well within the ability of the skilled person to determine which wafer compositions can suitably be used. Generally the wafers will be starch based e.g. made of wheat, rice, corn or other suitable flour. Other ingredients such as sugar, flavouring, emulsifier, milk ingredients, fat etc can be added. Preferably the wafer formulation comprises molasses.

Preferably wafers are prepared having a thickness of less than 3 mm, for example from 0.5 to 2.5 mm.

### Drawings

The invention will now be further illustrated by the following drawings;
Figure 1 shows a first surface wafer pattern according to the invention.
Figure 2 shows a second surface wafer pattern according to the invention.

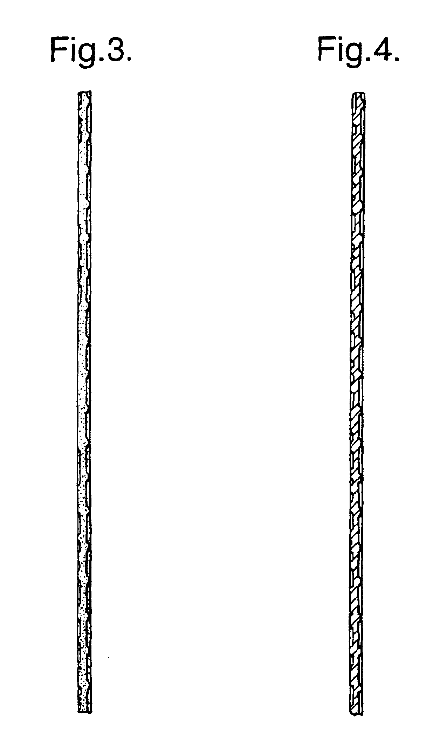

Figure 3 shows an end view of a wafer having a first surface pattern as shown in Figure 1 and a second surface pattern as shown in Figure 2.
Figure 4 shows a cross section through 4-4 of Figure 1 where the wafer has a first surface pattern as shown in Figure 1 and a second surface pattern as shown in Figure 2.
Figure 5 shows an alternative first surface pattern according to the invention.

Comparative Figure A shows a comparative surface pattern which does not provide a circular wafer product.

Comparative Figure B shows a second comparative surface pattern which does not provide a circular wafer product.

### Examples

The invention will now be further illustrated by the following examples.

### Example 1

A wafer batter having the following formulation was prepared;

| Ingredient | wt% |
|---|---|
| Flour | 38.82 |
| Sucrose | 18.63 |
| Molasses | 3.88 |
| Invert Sugar | 1.79 |
| Oil & Lecithin | 1.00 |
| Salt | 0.93 |
| Water | to 100 |

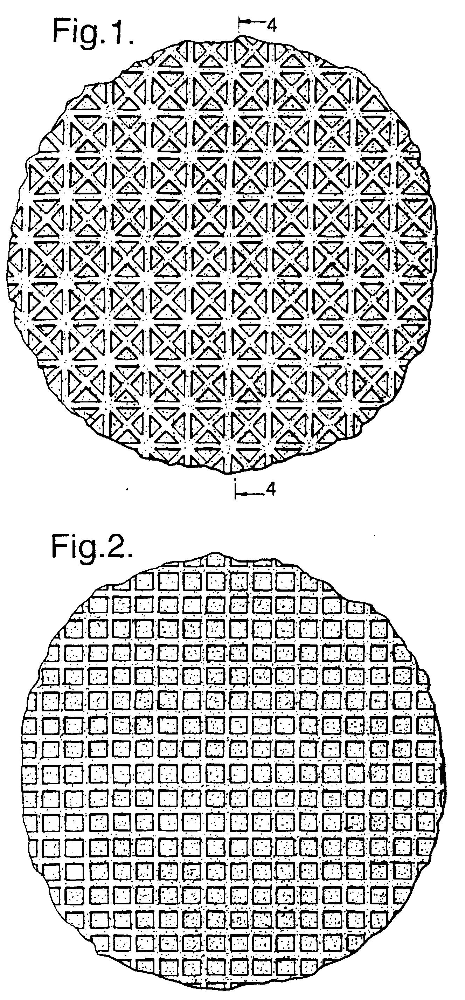

The batter was introduced between heated flat plates having a temperature of approximately 200°C and heated for 70 secs to provide a wafer. The flat plates had been engraved with a pattern such that one surface of the wafer was provided with the pattern shown in Figure 1 and the other surface was provided with the pattern shown in Figure 2, the pattern in Figure 2 being at 45° to the smaller square grid of the pattern shown in Figure 1.

An approximately circular, crisp wafer was provided, as shown by Figures 1 and 2.

### Example 2

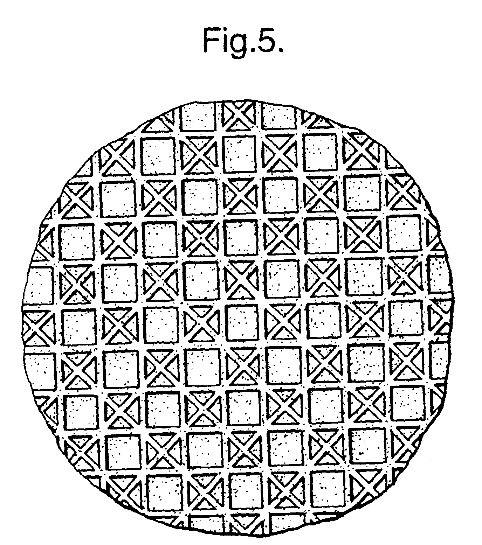

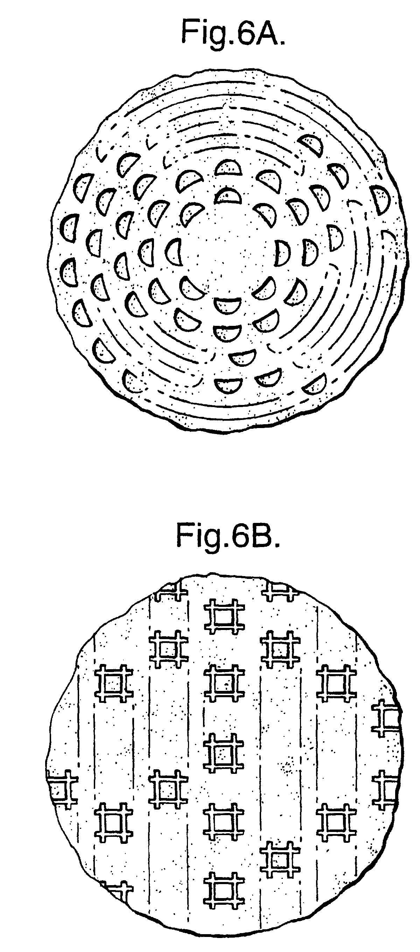

Example 1 was repeated except the heated flat plates used were engraved such that the wafer was provided with a first surface having a pattern as shown in Figure 5 and a second surface having a pattern as shown in Figure 2, the pattern in Figure 2 being at 45° to the smaller square grid of the pattern shown in Figure 5.

An approximately circular, crisp wafer was provided.

### Comparative Example A

Example 1 was repeated except that the heated flat plate was engraved such that the wafer was provided with a single surface having a pattern as shown in Figure A.

A wafer having the shape as shown in Figure A was produced. This shape is not sufficiently circular.

### Comparative Example B

Example 1 was repeated except that the heated flat plate was engraved such that the wafer was provided with a single surface having a pattern as shown in Figure B.

A wafer having the shape as shown in Figure B was produced. This shape is not sufficiently circular.

## Claims

1. A crisp, approximately circular wafer product whereby the two surfaces of the wafer each have a pattern formed by ridges, the first surface having a pattern comprising at least two grid patterns superimposed on each other, one grid being at an angle of approximately 45° to the other, the second surface having a single grid pattern, the pattern being at 45° to the lower grid on the first surface.

2. A wafer product according to claim 1 wherein each grid is formed by a pattern of squares.

3. A wafer according to claim 2 wherein a first grid of the first surface is of squares larger compared to the squares forming a second grid of said first surface.

4. A wafer product according to claim 2 wherein the squares forming the grid pattern on the second surface are smaller compared with the squares forming the first grid pattern on the first surface.

5. A wafer product according to claim 2 wherein the squares forming the grid pattern on the second surface are smaller compared with the squares forming either of the first and second grid patterns on the first surface.

6. A wafer a ccording to claim 2 wherein the grid of the second surface preferably has the same orientation as the first grid of the first surface.

## Revendications

1. Produit formant une gaufrette croustillante et suffisamment circulaire dans lequel les deux surfaces de la gaufrette ont chacune un motif formé par des saillies, la première surface ayant un motif formé par des saillies, la première surface ayant un motif comprenant au moins deux motifs de grille superposés l'un sur l'autre, l'une des grilles étant à un angle d'approximativement 45° par rapport à l'autre, la seconde surface étant munie d'un motif de grille unique, ledit motif étant placé à 45° par rapport à la grille inférieure sur la première surface.

2. Produit formant gaufrette selon la revendication 1, dans lequel chaque grille est formée par un motif de carreaux.

3. Gaufrette selon la revendication 2, dans laquelle une première grille de la première surface est constituée de carreaux qui sont plus grands que les carreaux qui formcnt une seconde grille de ladite surface.

4. Produit formant une gaufrette selon la revendication 2, dans lequel les carreaux formant le motif de grille sur la seconde surface sont plus petits que les carreaux formant le motif de la première grille sur la première surface.

5. Produit formant une gaufrette selon la revendication, dans lequel les carreaux formant le motif de grille sur la seconde surface sont plus petits que les carreaux formant l'un ou l'autre des motifs de première et de seconde grille sur la première surface.

6. Gaufrette selon la revendication 2, dans laquelle la grille de la seconde surface a de préférence la même orientation que la première grille de la première surface.

## Patentansprüche

1. Knuspriges, etwa kreisförmiges Waffelprodukt, wobei die beiden Oberflächen der Waffel jeweils ein durch Rippen gebildetes Muster haben und die erste Oberfläche ein Muster hat, das mindestens zwei übereinander liegende Gittermuster aufweist, wobei ein Gitter in einem Winkel von etwa 45° zum anderen vorliegt, und die zweite Oberfläche ein einziges Gittermuster hat, wobei das Muster unter 45° zum unteren Gitter an der ersten Oberfläche vorliegt.

2. Waffelprodukt nach Anspruch 1, wobei jedes Gitter durch ein Muster aus Quadraten gebildet ist.

3. Waffel nach Anspruch 2, wobei ein erstes Gitter der ersten Oberfläche aus Quadraten besteht, die größer sind als die Quadrate, die ein zweites Gitter auf der ersten Oberfläche bilden.

4. Waffelprodukt nach Anspruch 2, wobei die das Gittermuster auf der zweiten Oberfläche bildenden Quadrate kleiner sind als die Quadrate, die das erste Gittermuster auf der ersten Oberfläche bilden.

5. Waffelprodukt nach Anspruch 2, wobei die das Gittermuster auf der zweiten Oberfläche bildenden Quadrate kleiner als die Quadrate sind, die das erste und das zweite Gittermuster auf der ersten Oberfläche bilden.

6. Waffel nach Anspruch 2, wobei das Gitter der zweiten Oberfläche vorzugsweise dieselbe Orientierung wie das erste Gitter auf der ersten Oberfläche hat.
